Europäisches Patentamt

European Patent Office    (11) Numéro de publication: **0 188 949**
Office européen des brevets                                      **A1**

(19)

(12)                    **DEMANDE DE BREVET EUROPEEN**

(21) Numéro de dépôt: 85402537.6          (51) Int. Cl.⁴: **A 23 N 5/03,** A 23 N  5/08

(22) Date de dépôt: 18.12.85

(30) Priorité: 20.12.84  FR 8419849

(43) Date de publication de la demande: 30.07.86
Bulletin 86/31

(84) Etats contractants désignés: DE FR GB IT NL

(71) Demandeur: **Sociéte : BIOTROPIC, 429, rue de
l'Industrie, F-34000 Montpellier (FR)**
Demandeur: **Durand, Gilles, 62, rue du Grillon,
F-95610 Eragny (FR)**

(72) Inventeur: **Grussenmeyer, Jean Xavier, 19, Allée de
Valombré, F-69300 Caluire et Cuire (FR)**
Inventeur: **Durand, Gilles, 62, rue du Grillon,
F-95610 Eragny (FR)**

(74) Mandataire: **Mongrédien, André et al, c/o SOCIETE DE
PROTECTION DES INVENTIONS 25, rue de Ponthieu,
F-75008 Paris (FR)**

(54) **Machine à debourrer les noix de coco.**

(57)    L'invention concerne une machine destinée à débourrer
les noix de coco dotée d'un chargement continu. Cette machine trouve son utilisation dans les industries agricoles et/ou
alimentaires.

L'invention est constituée d'un bâti fixe (14) sur lequel
sont montés trois ensembles d'entraînement/débourrage disposés à 120° l'un par rapport à l'autre autour de l'axe vertical et
de trois ensembles de coupe/maintien placés eux aussi à 120°
mais décalés de 60° par rapport aux précédents (Planche 2/3).

L'ensemble entraînement/débourrage est constitué d'un
parallélogramme déformable (15) comportant: 4 poulies
guides (2) dont une motorisée entraînant deux chaînes (3) à
ergots (5), un tendeur de chaînes (4) et un pieu rétractable
(11), arrachant les bourres.

L'ensemble coupe/maintien se compose d'une lame motorisée (7) munie d'un système pendulaire (6) et d'un guide de
maintien (9).

Un ressort de rappel (20) ramène le parallélogramme
dans sa position initiale après débourrage.

L'invention concerne une machine nouvelle traitant l'acheminement et l'enlèvement mécanique du coir ou écorce fibreuse, plus communément appelée bourre, des noix de coco, pour permettre l'utilisation et la valorisation de ladite bourre, de la coque et de l'albumen ou amande comestible intérieure (Planche 3/3).

L'invention qui est en fait l'opération de débourrage des noix de coco en continu, intéresse les industries agricoles et/ou alimentaires, en sa qualité de premier poste de transformation de la noix de coco. Les travaux agronomiques ont permis la création de cocoteraies industrielles et la densification des cocoteraies naturelles sur toute la bande intertropicale et l'on dénombre ainsi environ 9 000 000 d'hectares de cocotiers.

Jusqu'à nos jours, cette opération se fait manuellement en se servant d'un pieu pointu appliqué au sol. Le manuel "Les Oléagineux", vol. 39 n° 6 de juin 1984 sur les conseils de l'Institut de Recherche des Huiles et Oléagineux, en donne une présentation. Mais cette opération est pénible et dangereuse.

Des tentatives de mécanisation de l'opération de débourrage ont été réalisées et font l'objet de différents brevets : le système de poussoir a le plus souvent été exploité, tel le brevet, référence de dépôt n° 76 07792 déposé en France le 18 mars 1976 fonctionnant en discontinu. Un système par défibrage a été exploité, tel le brevet déposé en Australie sous le n° PD 6789/78 en date du 15 novembre 1978, ou le brevet référence de dépôt n° 33039/75 déposé en Angleterre le 7 août 1975.

Mais soit pour des raisons économiques, soit pour des raisons pratiques liées au transport des noix, les réponses apportées n'ont pas solutionné le problème du débourrage.

L'invention enseigne à construire des machines motorisées de façon hydraulique, mécanique ou électrique, qui peuvent être utilisées aussi bien dans les plantations en équipement mobile, qu'en usine de traitement de la noix de coco à poste fixe. Le principe de cette nouvelle machine réside dans la façon de réaliser le débourrage des noix de coco en continu sans interruption du système pour le chargement de la noix à débourrer. Elle peut être tractée sur un plateau remorqué dans les plantations et les débourreurs travaillant sous l'arbre ne transportent plus que des noix débourrées. La bourre laissée sur plantation représente un apport important de matière organique et d'éléments minéraux (cf. Oléagineux Vol. 39 n° 6 page 32 de juin 1984).

On sait que les noix ont un système ternaire par rapport à l'axe longitudinal qui passe par le pédoncule et par l'extrémité et que les fibres constitutifs de la bourre et son enveloppe prennent naissance du côté du pédoncule.

L'invention est composée de six ensembles modulables et interchangeables : trois modules d'entraînement, trois modules de coupe-guidage, formant entre eux un angle de 120° autour de l'axe vertical de la machine et décalés entre eux de 60° par rapport à ce même axe. Les chaînes à ergots entraînent les noix de haut en bas, dans l'axe de la machine, le pédoncule vers le bas. (Planche 2/3).

La prise en charge de la noix est effectuée en partie haute de la machine par des chaînes (3) munies d'ergots (5). Sous l'effet de la forme de la noix, les parallélogrammes (1) se déforment autour des axes et compriment le ressort (20) en laissant passer le fruit vers des lames de coupe motorisées (7), montées sur un système pendulaire (6) parallèle à l'axe machine. Le moteur de ce système pendulaire, placé vers le haut, servant de contrepoids réglable, un ressort de rappel ramène l'ensemble après la découpe de la bourre.

L'expérience montre que des disques rotatifs non motorisés ne peuvent que couper les premières fibres et repousser les autres vers le fond des rainures de coupe. La non pénétration dans la partie pédonculaire provoque une adhérence sur la coque.

Les disques de coupe (7) entaillent la bourre suivant le système ternaire de la noix et entrent en contact avec la coque plus dure. Les ensembles "coupe", préalablement réglés, se dégagent en contournant la coque et reprennent leur place initiale sous l'effet des ressorts. Il est à noter que la noix peut se présenter légèrement décalée par rapport à l'axe vertical sans influer sur le résultat.

Passé le secteur coupe, la noix continue sa descente vers les pieux de débourrage (11). La partie supérieure du parallélogramme se referme sous l'effet du ressort (20) prenant appui sur le bâti.

Il nous est apparu que les efforts d'arrachement des trois secteurs ne sont pas égaux d'où l'introduction dans l'invention d'un guide vertical (9) articulé autour de l'axe et du ressort (10) servant au maintien de la coque. Il se place dans la saignée pratiquée par la lame de coupe (7).

La noix reste dès lors dans l'axe central et vertical de la machine.

SP 3147 AM/LW

La noix dans cette configuration, c'est-à-dire :

- noix entraînée, bourre coupée,

- coque maintenue et centrée,

se présente sur des pieux mobiles (11) articulés autour des axes (12) et reliés entre eux par des ressorts de synchronisation (18). Sous l'effet de la forme de la noix, la partie inférieure du parallélogramme s'écarte, les pieux (11) se plantent dans la bourre et, au contact de la coque, s'esquivent autour de l'axe (12), provoquant la séparation coque bourre, par arrachement.

Les trois secteurs de bourre plantés dans les ergots (5) sont évacués vers l'arrière de la machine, la coque débourrée tombe entre les pieux mobiles.

A titre d'exemple non limitatif, on va décrire un mode de réalisation. (Planche 1/3).

Le bâti réalisé en mécano-soudé est équipé des trois parallélogrammes (1) à 120° articulés d'un encombrement entre axes de 440 mm par 350 mm, et de trois modules effectuant la coupe et le maintien de la noix pendant le débourrage. La déformation des parallélogrammes se produit de la façon suivante :

Les guides (2) de chaînes inférieurs sont fixes et le bras de liaison horizontal des guides (2) supérieurs se déplace parallèlement à lui-même sous l'effet de la réaction de la forme de la noix. Le déplacement de cet ensemble est de l'ordre de 100 mm.

L'entraînement des chaînes est réalisé par les guides (2) au nombre de quatre par ensemble. Il est complété par un tendeur de chaînes (4). Les guides inférieurs et extérieurs par rapport à l'axe de la machine sont entraînés en rotation par l'intermédiaire de bras de liaison (19) dont le réglage est assuré par un emmanchement cannelé. Les bras sont liés entre eux par des joints du cardan. Le mouvement est donné par l'organe moteur hydraulique, électrique ou mécanique d'une puissance d'environ 10 CV (16).

Les ergots (5) équipant les chaînes sont espacés d'environ 100 mm et pénètrent dans la bourre d'environ 15 mm. Ces réglages sont susceptibles de variation suivant la variété des noix traitées. Pour des raisons d'économie, ces chaînes à ergots sont réversibles.

Les pieux sont constitués d'un corps (11) qui reçoit des dents amovibles servant de pièces d'usure. Le support (13) de ces pieux est lié au bâti fixe par l'intermédiaire d'un axe horizontal (12) permettant l'écartement des pieux par rapport à l'axe vertical de la machine provoquant simultanément l'arrachage de la bourre et le dégagement de la noix de coco.

L'enlèvement des bourres est réalisé par une lame liée au support des pieux et se présentant entre les chaînes avec un angle suffisamment faible par rapport à l'horizontal pour dégager les bourres des ergots.

Les lames rotatives (7) peuvent, soit être libres en rotation autour de leur axe, soit motorisés par entraînement hydraulique ou électrique par l'intermédiaire d'un jeu de courroies et poulies trapézoïdales. L'ensemble est composé d'un système pendulaire (6) fixé au bâti de la machine (14). La pénétration de la lame est d'environ 20 à 30 mm.

Le rappel de l'ensemble (1) vers l'axe vertical de la machine est constitué par le ressort (20) guidé sur un axe horizontal qui prend appui vers l'extérieur sur le bâti fixe et sur les bras verticaux intérieurs des parallélogrammes.

Bien que la machine décrite soit conçue pour le débourrage des noix de coco, elle pourrait s'appliquer, par des réglages simples, au découquage des amandes de noix de coco en entamant la résistance des coques. Ces deux opérations débourragedécoquage pourraient être réalisées par la même opération.

La question préalable à toute forme de développement des technologies liées à la transformation de la noix de coco est le débourrage en continu.

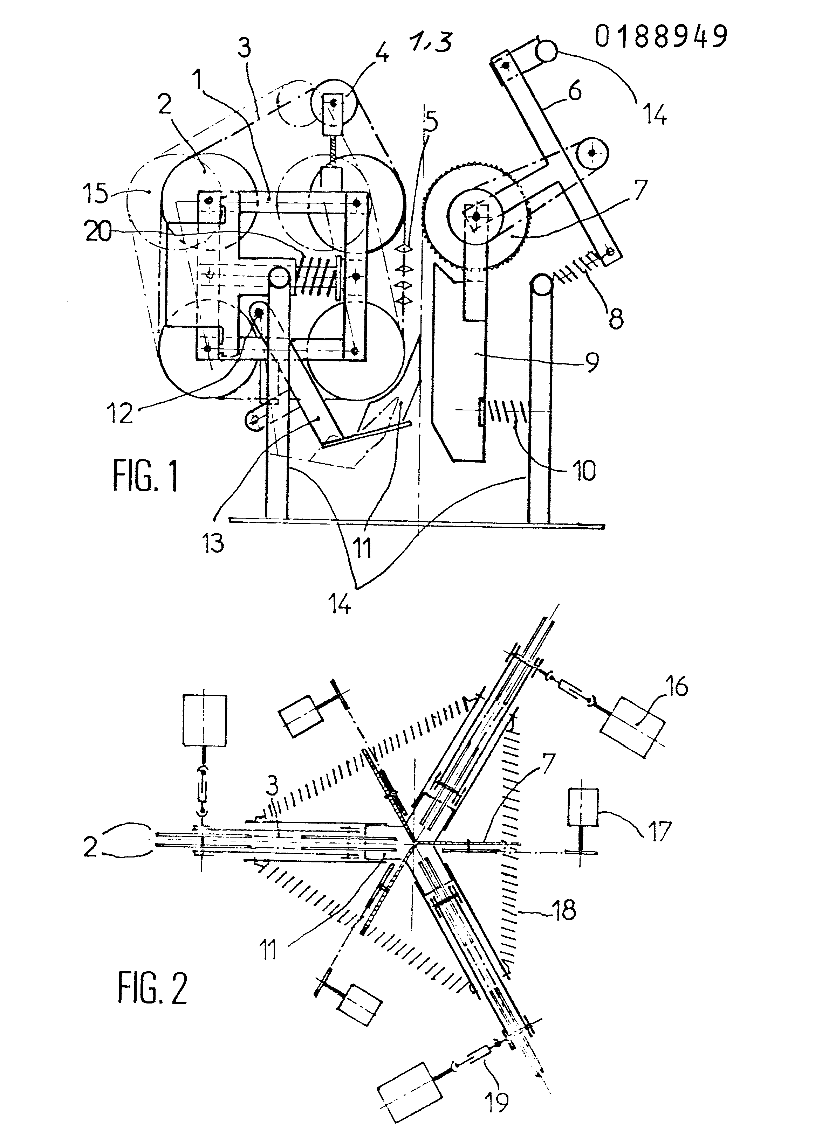

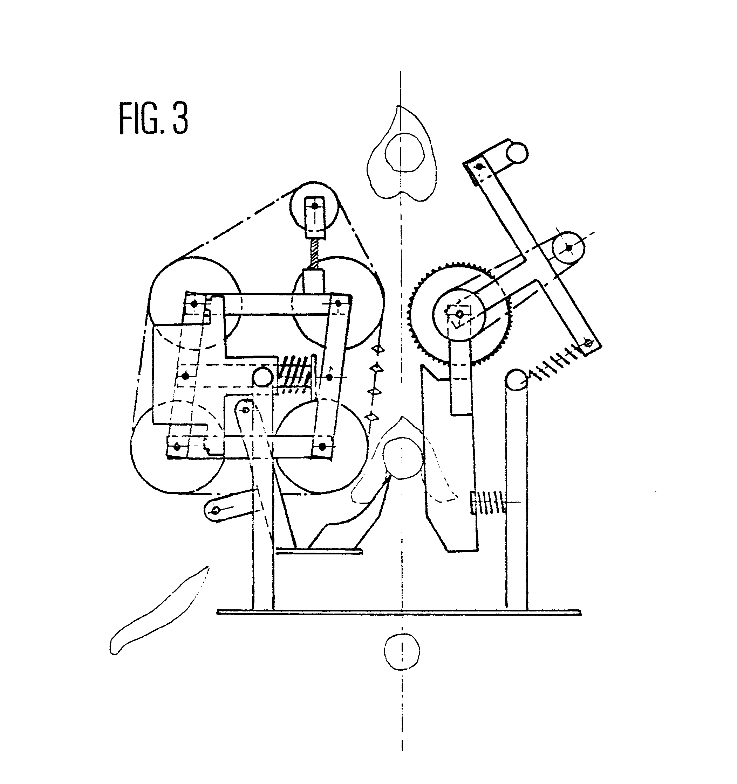

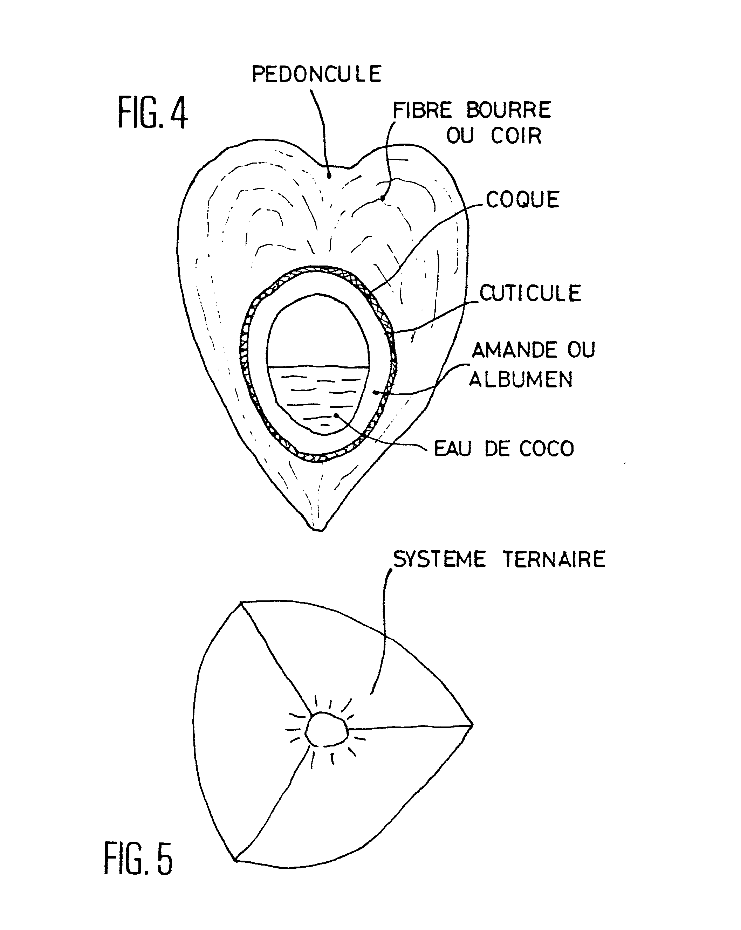

## REVENDICATIONS

1 - Machine pour enlever l'enveloppe fibreuse, dite bourre, de la noix de coco, caractérisée par le fait qu'elle comporte : un système de travail en continu ne nécessitant pas d'arrêt pour le chargement, réalisé par des chaînes à ergots guidées qui entraînent la noix sur trois lames rotatives ayant pour objet de couper la bourre suivant son système ternaire et permettant l'arrachage de la boure par trois pieux rétractables laissant échapper la noix débourrée entre eux.

2 - Machine selon la revendication 1 caractérisée par un nombre de parallélogrammes, de lames, de pieux et de doubles chaînes à ergots, chacun égal au nombre de secteurs naturels de la bourre de noix de coco c'est-à-dire trois.

3 - Machine selon les revendications 1 et 2 caractérisée par le fait que l'entraînement des noix de coco se fait suivant l'axe vertical confondu avec l'axe longitudinal des noix de coco.

4 - Machine selon les revendications 1 et 2 caractérisée par le fait qu'elle comporte un système de rappel en position originale des paralalélogrammes déformables permettant le suivi intégral des formes de la coque dure des noix de coco.

5 - Machine selon les revendications 3 et 4 caractérisée en ce que les pieux rétractables sont équipés de pièces d'usure dont les extrémités ont leur intersection commune dans l'axe permettant le passage de la noix entre eux.

6 - Machine selon la revendication 1 caractérisée par le fait que son équipement comporte trois butées de décolmatage des chaînes à ergots servant à l'entraînement en continu des noix et des bourres.

7 - Machine selon les revendications de 1 à 6 qui permet une utilisation à poste fixe en usine et/ou une utilisation sur remorque tractée en équipement mobile dans les plantations.

FIG. 1

FIG. 2

0188949

FIG. 3

3,3

0188949

FIG. 4

PEDONCULE

FIBRE BOURRE
OU COIR

COQUE

CUTICULE

AMANDE OU
ALBUMEN

EAU DE COCO

SYSTEME TERNAIRE

FIG. 5

0188949

Numéro de la demande

# RAPPORT DE RECHERCHE EUROPEENNE

EP 85 40 2537

Office européen
des brevets

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| D,A | FR-A-2 344 235 (SOCIETE POUR LE DEVELOPPEMENT ET L'EXPLOITATION DU PALMIER A HUILE) <br> * Page 2, lignes 1-22; page 6, lignes 5-19; figures 1,3 * <br> --- | 1 | A 23 N 5/03 <br> A 23 N 5/08 |
| A | US-A-2 783 801 (A.L. MIX) <br> --- | | |
| D,A | AU-B- 52 881 (UNISEARCH LTD.)(A.D. 1979) <br> --- | | |
| A | DE-C- 159 034 (FR. HAAKE) <br> --- | | |
| D,A | GB-A-1 540 837 (NATIONAL RESEARCH DEVELOPMENT CORPORATION) <br> ----- | | |

DOMAINES TECHNIQUES
RECHERCHES (Int. Cl.4)

A 23 N

Le présent rapport de recherche a été établi pour toutes les revendications

| Lieu de la recherche | Date d'achèvement de la recherche | Examinateur |
|---|---|---|
| LA HAYE | 05-03-1986 | NEHRDICH H.J |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82